(19) Europäisches Patentamt / European Patent Office / Office européen des brevets

(11) **EP 3 910 704 A1**

(12) **EUROPEAN PATENT APPLICATION**
published in accordance with Art. 153(4) EPC

(43) Date of publication:
**17.11.2021 Bulletin 2021/46**

(21) Application number: **20738219.3**

(22) Date of filing: **08.01.2020**

(51) Int Cl.:
**H01M 4/139** (2010.01)     **H01M 4/62** (2006.01)
**H01G 11/38** (2013.01)

(86) International application number:
**PCT/JP2020/000271**

(87) International publication number:
**WO 2020/145295 (16.07.2020 Gazette 2020/29)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **11.01.2019 JP 2019003595**

(71) Applicant: **Kuraray Co., Ltd.**
**Kurashiki-shi, Okayama 710-0801 (JP)**

(72) Inventors:
• **TACHIKAWA, Kengo**
  **Kurashiki-shi, Okayama 710-0801 (JP)**
• **TANAKA, Toshimitsu**
  **Kurashiki-shi, Okayama 710-0801 (JP)**
• **INUI, Yoshihisa**
  **Kurashiki-shi, Okayama 710-0801 (JP)**
• **IWASAKI, Hideharu**
  **Kurashiki-shi, Okayama 710-0801 (JP)**

(74) Representative: **Müller-Boré & Partner**
**Patentanwälte PartG mbB**
**Friedenheimer Brücke 21**
**80639 München (DE)**

(54) **NON-AQUEOUS ELECTROLYTE CELL ELECTRODE BINDER, NON-AQUEOUS ELECTROLYTE CELL ELECTRODE BINDER SOLUTION, NON-AQUEOUS ELECTROLYTE CELL ELECTRODE SLURRY, NON-AQUEOUS ELECTROLYTE CELL ELECTRODE, AND NON-AQUEOUS ELECTROLYTE CELL**

(57)     The present invention relates to a non-aqueous electrolyte cell electrode binder, comprising a water-soluble resin, wherein
when the binder is in a state of an aqueous solution with a solid content concentration of 10% by mass, a viscosity at a shear rate of 10 s$^{-1}$ at 25°C of the aqueous solution is from 4 Pa·s to 30 Pa·s, and a thixotropic index defined by a viscosity ratio between a viscosity at a shear rate of 10 s$^{-1}$ and a viscosity at a shear rate of 100 s$^{-1}$ at 25°C of the aqueous solution is from 1.8 to 5.

EP 3 910 704 A1

**Description**

Technical Field

The present invention relates to a non-aqueous electrolyte cell electrode binder, a non-aqueous electrolyte cell electrode binder solution, a non-aqueous electrolyte cell electrode slurry, a non-aqueous electrolyte cell electrode, and a non-aqueous electrolyte cell.

Background Art

In recent years, mobile terminals such as mobile phones, notebook computers, and pad-type information terminal devices have become remarkably widespread. Mobile terminals are required to be more comfortable to carry, and with the rapid progress of downsizing, thinning, weight reduction, and high performance, battery cells used in mobile terminals are also required to achieve downsizing, thinning, weight reduction, and high performance. Lithium-ion secondary cells are often used as secondary cells used as power sources for such mobile terminals. Non-aqueous electrolyte cells such as lithium-ion secondary cells and the like have a structure in which positive and negative electrodes are installed via a separator and stored in a container together with an electrolytic solution containing a lithium salt such as $LiPF_6$, $LiBF_4$, LiTFSI (lithium bis[(trifluoromethyl)sulfonyl]imide), or LiFSI (lithium bis(fluorosulfonyl)imide) dissolved in an organic liquid such as ethylene carbonate.

Positive and negative electrodes that constitute a non-aqueous electrolyte cell are each usually formed by coating a current collector with electrode slurry, which is obtained by dissolving or dispersing a binder and a thickener in water or a solvent and mixing an active material, a conductive agent (conducting agent), and the like thereinto, and then drying the water or solvent, thereby binding the coating as a mixed layer to the current collector.

From the viewpoint of reducing the burden on the environment and the convenience of manufacturing equipment, especially in the production of negative electrodes, the transition to electrode slurry using an aqueous medium is rapidly progressing. As such a binder for an aqueous medium, binders of a vinyl alcohol-based polymer, an acrylic-based polymer such as acrylic acid, an amide/imide-based polymer, and the like are known (e.g., Patent Literature 1 and 2).

Meanwhile, in the production of positive electrodes, electrode slurry using a solvent is generally used. Examples of such a solvent include organic solvents such as N-methyl-2-pyrrolidone, dimethylformamide, N,N-dimethylacetamide, N,N-dimethyl methanesulfonamide, and hexamethylphosphoric triamide. As a binder for such organic solvents, a vinylidene fluoride-based polymer, a tetrafluoroethylene-based polymer, fluororubber, or the like can be used (e.g., Patent Literature 3 and 4).

Prior Art Documents

Patent Documents

Patent Document 1: JP-A-H11-250915
Patent Document 2: JP-A-2017-59527
Patent Document 3: JP-A-2017-107827
Patent Document 4: JP-A-2013-37955

Summary of the Invention

Technical Problem

However, in the production of both negative and positive electrodes, a slurry obtained by mixing a binder, a solvent (water or solvent), an active material, a conductive agent (conducting agent), and the like causes many problems when applied to a current collector so as to form an electrode due to the forms of materials such as a binder in the slurry and various conditions in slurry preparation.

For example, a slurry prepared in such a way that it contains water and a vinyl alcohol-based polymer generally used as a binder for negative electrodes has a low viscosity, so that the active material or the like tends to settle, and thus the slurry lacks stability. Meanwhile, even in a case in which a slurry is made highly viscous by increasing the molecular weight of a water-soluble resin in the slurry, as it becomes difficult to disperse the active material and the like in the slurry and it becomes difficult to form an electrode uniformly, it is difficult to obtain sufficient performance, particularly a high discharge capacity retention rate.

Meanwhile, even in the case of a slurry prepared in such a way that it contains a vinylidene fluoride-based polymer mainly used as a binder for positive electrodes and an organic solvent, as in the case in which the solvent is water, due to the influence of the preparation conditions, the problem of solubility in the organic solvent arises. Therefore, it may be difficult to form a uniform electrode and maintain a suitable discharge capacity retention rate in the formed electrode. In addition to the above, particularly in a case in which an electrode is formed using a slurry containing a commonly used vinylidene fluoride-based polymer (e.g., Patent Literature 3 and 4), as the adhesiveness of metal foil between a binder and a current collector of the electrode is weak, the peeling strength of the electrode is low, and therefore the active material in the electrode layer is likely to be removed from the metal foil.

An object of the present invention is to provide a non-aqueous electrolyte cell electrode binder, by which a suitably uniform electrode can be formed, and the electrode has an excellent peeling strength and a high discharge capacity retention rate in the case of using the non-aqueous electrolyte cell electrode binder for a non-aqueous electrolyte cell electrode.

Solution to Problem

As a result of intensive studies, the present inventors found that in a case in which a non-aqueous electrolyte cell electrode binder containing a water-soluble resin is in a given aqueous solution state, when the aqueous solution has a viscosity within a given range under given conditions and a thixotropic index within a given range under given conditions, a suitably uniform electrode can be formed, and the electrode has an excellent peeling strength and a high discharge capacity retention rate in the case of using the binder for an electrode.

In other words, the present invention encompasses the following preferred embodiments.

[1] A non-aqueous electrolyte cell electrode binder, comprising a water-soluble resin, wherein when the binder is in a state of an aqueous solution with a solid content concentration of 10% by mass, a viscosity at a shear rate of 10 $s^{-1}$ at 25°C of the aqueous solution is from 4 Pa ·s to 30 Pa ·s, and a thixotropic index defined by a viscosity ratio between a viscosity at a shear rate of 10 $s^{-1}$ and a viscosity at a shear rate of 100 $s^{-1}$ at 25°C of the aqueous solution is from 1.8 to 5.

[2] The non-aqueous electrolyte cell electrode binder according to [1], wherein when the binder is in a state of an N-methyl-2-pyrrolidone solution with a solid content concentration of 7.5% by mass, the viscosity at a shear rate of 10 $s^{-1}$ at 25°C of the solution is from 4 Pa·s to 35 Pa·s, and the thixotropic index defined by a viscosity ratio between a viscosity at a shear rate of 10 $s^{-1}$ and a viscosity at a shear rate of 100 $s^{-1}$ at 25°C of the solution is from 2 to 6.

[3] The non-aqueous electrolyte cell electrode binder according to [1] or [2], wherein the water-soluble resin is a vinyl alcohol-based polymer having a crosslinked structure.

[4] The non-aqueous electrolyte cell electrode binder according to any one of [1] to [3], wherein a degree of modification of the water-soluble resin is from 0.02% by mol to 5% by mol based on the number of moles of all monomer units constituting the water-soluble resin.

[5] A non-aqueous electrolyte cell electrode binder solution, comprising the non-aqueous electrolyte cell electrode binder according to any one of [1] to [4] and water, wherein a viscosity at a shear rate of 10 $s^{-1}$ at 25°C of the solution is from 4 Pa·s to 30 Pa ·s, and a thixotropic index defined by a viscosity ratio between a viscosity at a shear rate of 10 $s^{-1}$ and a viscosity at a shear rate of 100 $s^{-1}$ at 25°C of the solution is from 1.8 to 5.

[6] A non-aqueous electrolyte cell electrode binder solution, comprising the non-aqueous electrolyte cell electrode binder according to any one of [1] to [4] and N-methyl-2-pyrrolidone, wherein a viscosity at a shear rate of 10 $s^{-1}$ at 25°C of the solution is from 4 Pa·s to 35 Pa ·s, and a thixotropic index defined by a viscosity ratio between a viscosity at a shear rate of 10 $s^{-1}$ and a viscosity at a shear rate of 100 $s^{-1}$ at 25°C of the solution is from 2 to 6.

[7] A non-aqueous electrolyte cell electrode slurry, comprising the non-aqueous electrolyte cell electrode binder solution according to [5] or [6] and an active material.

[8] The non-aqueous electrolyte cell electrode slurry according to [7], wherein a content of the non-aqueous electrolyte cell electrode binder is from 0.1 parts by mass to 20 parts by mass with respect to 100 parts by mass of the active material.

[9] A non-aqueous electrolyte cell electrode, comprising a cured product of the non-aqueous electrolyte cell electrode slurry according to [7] or [8] and a current collector.

[10] A non-aqueous electrolyte cell, comprising the non-aqueous electrolyte cell electrode according to [9].

Effects of the Invention

According to the present invention, it is possible to provide a non-aqueous electrolyte cell electrode binder, by which a suitably uniform electrode can be formed, and the electrode has an excellent peeling strength and a high discharge capacity retention rate in the case of using the non-aqueous electrolyte cell electrode binder for a non-aqueous electrolyte cell electrode.

Description of Embodiments

Hereinafter, embodiments of the present invention will be described in detail. There is no intention to limit the present invention to the following embodiments.

<Non-Aqueous Electrolyte Cell Electrode Binder>

The non-aqueous electrolyte cell electrode binder of the present invention (hereinafter also simply referred to as "the binder of the present invention" or "the binder") contains a water-soluble resin, and when it is in a state of an aqueous solution with a solid content concentration of 10% by mass (hereinafter also referred to as "given aqueous solution state"), the viscosity of the aqueous solution at a shear rate 10 s$^{-1}$ at 25°C is from 4 Pa ·s to 30 Pa ·s.

The viscosity of the binder in a given aqueous solution state at 25°C and a shear rate of 10 s$^{-1}$ is 4 Pa ·s or more such that when the binder is in a state of the non-aqueous electrolyte cell electrode slurry of the present invention described later (hereinafter also simply referred to as "the slurry of the present invention" or "the slurry"), the adhesiveness between a cured product of the slurry, particularly an active material which the cured product may comprise and, in some cases, a conductive auxiliary agent or the like and a current collector is improved, and an electrode having an excellent peeling strength can be formed. The viscosity of the binder in a given aqueous solution state at 25°C and a shear rate of 10s$^{-1}$ is 30 Pa ·s or less such that the dispersibility of the active material or the like in the slurry can be maintained, and as a result, the effect of suppressing the aggregation or sedimentation of the active material or the like is strengthened.

Further, as the slurry containing the binder of the present invention is stable, unevenness is less likely to occur when forming the non-aqueous electrolyte cell electrode of the present invention (hereinafter also simply referred to as "the electrode of the present invention" or "the electrode"), the discharge capacity retention rate of the eventually obtained non-aqueous electrolyte cell of the present invention (hereinafter also simply referred to as "the cell of the present invention" or "the cell") can be kept high, and the electrical resistance can be lowered.

The lower limit of the binder in a given aqueous solution state at 25°C and a shear rate of 10 s$^{-1}$ is preferably 4.1 Pa ·s or more, more preferably 4.5 Pa ·s or more, still more preferably 5 Pa ·s or more, even more preferably 6 Pa ·s or more, yet more preferably 9 Pa·s or more. The upper limit of the binder in a given aqueous solution state at 25°C at a shear rate of 10 s$^{-1}$ is preferably 29 Pa ·s or less, more preferably 28.5 Pa·s or less, still more preferably 28 Pa ·s or less, even more preferably 27.5 Pa ·s or less.

For the binder of the present invention in a given aqueous solution state, the thixotropic index (hereinafter also simply referred to as "TI") defined by a viscosity ratio between a viscosity at a shear rate of 10 s$^{-1}$ and a viscosity at a shear rate of 100 s$^{-1}$ at 25°C of the aqueous solution (viscosity at a shear rate of 10 s$^{-1}$/viscosity at a shear rate of 100s$^{-1}$) is from 1.8 to 5.

As TI of the binder in a given aqueous solution state is within the above-described range such that when the slurry is applied to the current collector, a uniform electrode film can be formed, and as a result, the discharge capacity retention rate of the eventually obtained cell can be increased and the electric resistance can be reduced.

The lower limit of TI defined by the viscosity ratio of the binder in a given aqueous solution state is preferably 1.82 or more, more preferably 2 or more, still more preferably 2.01 or more, even more preferably 2.2 or more, yet more preferably 2.22 or more. The upper limit of TI defined by the viscosity ratio of the binder in a given aqueous solution state is preferably 4.1 or less, more preferably 5 or less, still more preferably 4 or less, even more preferably 3.5 or less.

The solid content concentration in the solution described herein can be calculated from, for example, the mass of the remaining solid content after weighing the solution (i.e., a solution containing a binder) in an aluminum cup and drying it in a hot air dryer.

For the binder of the present invention in a state of an N-methyl-2-pyrrolidone (hereinafter also simply referred to as "NMP") solution having a solid content concentration of 7.5% by mass (hereinafter also referred to as "given NMP solution state"), the viscosity of the solution at a shear rate of 10 s$^{-1}$ at 25°C is from 4 Pa·s to 35 Pa·s, and TI defined by a viscosity ratio between a viscosity at a shear rate of 10 s$^{-1}$ and a viscosity at a shear rate of 100 s$^{-1}$ at 25°C may be from 2 to 6.

The viscosity of the binder in a given NMP solution state at 25°C and a shear rate of 10 s$^{-1}$ is 4 Pa ·s or more such that when the binder is in a state of a slurry containing NMP as a solvent, the adhesiveness between a cured product of the slurry, particularly an active material which the cured product may comprise and, in some cases, a conductive auxiliary agent or the like and a current collector is improved, and an electrode having a significantly excellent peeling strength can be formed. The viscosity of the binder in a given NMP solution state at 25°C and a shear rate of 10s$^{-1}$ is 35 Pa·s or less such that the dispersibility of the active material or the like in the slurry containing NMP as a solvent can be maintained, and as a result, the effect of suppressing the aggregation or sedimentation of the active material or the like is strengthened.

As TI of the binder in a given NMP solution state is within the above-described range such that when the slurry containing NMP as a solvent is applied to the current collector, a more uniform electrode film can be formed, and as a result, the discharge capacity retention rate of the eventually obtained cell can be further increased.

The lower limit of the binder in a given NMP solution state at 25°C and a shear rate of 10 s$^{-1}$ is preferably 4.5 Pa·s or more, more preferably 5 Pa·s or more, still more preferably 8.5 Pa·s or more, even more preferably 15 Pa·s or more. The upper limit of the binder in a given NMP solution state at 25°C at a shear rate of 10 s$^{-1}$ may be preferably 33 Pa·s or less, more preferably 27 Pa·s or less, still more preferably 24 Pa·s or less.

The lower limit of TI defined by the viscosity ratio of the binder in a given NMP solution state may be preferably 2.2 or more, more preferably 2.5 or more, still more preferably 2.7 or more. The upper limit of TI defined by the viscosity ratio of the binder in a given NMP solution state may be preferably 5.7 or less, more preferably 5 or less, still more preferably 4.79 or less, even more preferably 3.2 or less.

The viscosity of the binder in a given aqueous solution state or a given NMP solution state at 25°C and shear rates of 10 s$^{-1}$ and 100s$^{-1}$ described herein can be measured using each solution as a measurement sample with, for example, an E-type viscometer.

The viscosity and TI of an aqueous solution or an NMP solution can be adjusted by the degree of modification or a water-soluble resin, the viscosity average degree of polymerization, temperature conditions and the like in the step of heating a water-soluble resin, types and addition amounts of the other materials added to a binder, the content of a binder in water or NMP, and the like as appropriate as described later.

The water-soluble resin described herein may be any resin as long as 1 g or more of the resin can be dissolved in 100 g of water. Examples of the water-soluble resin include, but are not limited to, a vinyl alcohol-based polymer and a derivative thereof, an acrylic polymer such as (meth)acrylic acid and a derivative thereof, a cellulose derivative such as carboxymethyl cellulose, alginic acid and a neutralized product thereof, and polyvinylpyrrolidone.

Of these, the water-soluble resin is preferably a vinyl alcohol-based polymer or a derivative thereof. This is because a vinyl alcohol-based polymer (also herein referred to as "polyvinyl alcohol" or simply "PVA") has good affinity for active materials such as carbon materials, metals, and metal oxides used in a non-aqueous electrolyte cell. The water-soluble resin is more preferably PVA having a crosslinked structure. This is because when it has a crosslinked structure, the viscosity and TI of the binder in a given aqueous solution state can be controlled within a given range as described above.

The method of forming the crosslinked structure of PVA is not particularly limited. Examples of the method may include a method of heating PVA in a nitrogen or air atmosphere, a method of acidifying unmodified PVA, and a method of chemical crosslinking with a polyfunctional additive. Alternatively, a modified PVA capable of constructing a crosslinked structure in advance may be used.

In the method of acidifying unmodified PVA, examples of a usable acidic substance may include: inorganic acids such as acetic acid, hydrochloric acid, sulfuric acid, nitric acid, and phosphoric acid; organic acids such as formic acid, acetic acid, oxalic acid, and p-toluenesulfonic acid; salts such as pyridinium p-toluenesulfonate and ammonium chloride; and Lewis acids such as zinc chloride, aluminum chloride, iron trichloride, tin dichloride, tin tetrachloride, and boron trifluoride diethyl ether complex. Of these, one type or a combination of two or more types can be used. The blending amounts of these acidic substances are preferably from 0.0001 parts by mass to 5 parts by mass with respect to 100 parts by mass of PVA.

In the method of chemical crosslinking with a polyfunctional additive, examples of a usable polyfunctional additive include glyoxal, dials such as 1,4-butanedial, diepoxides such as ethylene glycol diglycidyl ether and diethylene glycol diglycidyl ether, and diisocyanates such as hexamethylene diisocyanate and toluene diisocyanate. The blending amounts of these polyfunctional additives are preferably from 0.0001 parts by mass to 5 parts by mass with respect to 100 parts by mass of PVA.

As PVA, one obtained by saponifying a vinyl ester-based polymer can be used.

The vinyl ester-based monomer used in the production of the vinyl ester-based polymer is not particularly limited, but examples thereof include vinyl formate, vinyl acetate, vinyl propionate, vinyl acetate, vinyl isobutyrate, vinyl pivalate, vinyl versaticate, vinyl caproate, vinyl caprylate, vinyl laurate, vinyl palmitate, vinyl stearate, vinyl oleate, and vinyl benzoate. Of these, vinyl acetate is preferable from the economic viewpoint.

PVA may be an unmodified PVA consisting only of vinyl alcohol units, but preferably further contains units derived from a monomer (a). PVA having a crosslinked structure can be produced by heating a polymer composed of a vinyl alcohol monomer and the monomer (a) so as to form an ester bond.

The monomer (a) may be at least one monomer selected from the group consisting of a carboxylic acid having an unsaturated double bond, alkyl ester of the carboxylic acid, acid anhydride of the carboxylic acid, a salt of the carboxylic acid, and a silyl compound having an unsaturated double bond.

Examples of a carboxylic acid having an unsaturated double bond, alkyl ester of the carboxylic acid, acid anhydride of the carboxylic acid, and a salt of the carboxylic acid can include maleic acid, monomethyl maleate, dimethyl maleate, monoethyl maleate, diethyl maleate, maleic anhydride, citraconic acid, monomethyl citraconate, dimethyl citraconate, diethyl citraconate, citraconic anhydride, fumaric acid, monomethyl fumarate, dimethyl fumarate, monoethyl fumarate, diethyl fumarate, itaconic acid, monomethyl itaconate, dimethyl itaconate, monoethyl itaconate, diethyl itaconate, itaconic anhydride, acrylic acid, methyl acrylate, ethyl acrylate, methacrylic acid, methyl methacrylate, and ethyl methacrylate.

Examples of a silyl compound having an unsaturated double bond may include compounds having an unsaturated double bond and a trialkoxysilyl group such as vinyl trimethoxysilane and vinyl triethoxysilane.

Of these monomers (a), monomethyl maleate, dimethyl maleate, monomethyl citraconate, monomethyl fumarate, monomethyl itaconate, itaconic anhydride, methyl acrylate, methyl methacrylate, and vinyl trimethoxysilane, which can form a crosslinked structure with the ease of controlling viscosity, are preferable, and monomethyl maleate, dimethyl maleate, monomethyl fumarate, itaconic anhydride, methyl acrylate, methyl methacrylate, or vinyl trimethoxysilane is more preferable.

The degree of modification of the water-soluble resin is preferably from 0.02% by mol to 5% by mol based on the number of moles of all monomer units constituting the water-soluble resin. Note that the degree of modification of the water-soluble resin means the content of units derived from monomer (a) based on the number of moles of all monomer units of the water-soluble resin.

The lower limit of the degree of modification is more preferably 0.05% by mol, still more preferably 0.1% by mol, even more preferably 0.2% by mol. The upper limit of the degree of modification is more preferably 4.5% by mol, still more preferably 3% by mol, even more preferably 1.1% by mol.

The degree of modification of the water-soluble resin can be determined by a method of $^1$H-NMR using a water-soluble resin, for example, a vinyl ester polymer that is a precursor of PVA, as in the Examples described later.

As the degree of modification is from 0.02% by mol to 5% by mol, the viscosity and TI of a binder containing a water-soluble resin in a solution state can be easily adjusted within the respective predetermined ranges such that the adhesiveness of an adhesive layer formed from a slurry comprising the binder which contains a water-soluble resin is further improved.

Specifically, when the degree of modification of the water-soluble resin is increased, the viscosity and TI of a solution in a given aqueous solution state or a given NMP solution state increases. By setting the degree of modification to 5% by mol or less, it is possible to maintain, but not excessively increase, the viscosity and TI in a given aqueous solution state or a given NMP solution within predetermined ranges thereof, making it possible to obtain a more excellent solubility of the water-soluble resin in water or NMP. In addition, the binder of the present invention can stabilize the prepared slurry such that the risk of aggregation of an active material in the slurry can be further reduced, and an electrode can be more preferably and evenly formed. Therefore, the eventually produced cell of the present invention can be configured to have a lower resistance and a higher discharge capacity retention rate. Meanwhile, by setting the degree of modification to 0.02% by mol or more, it is possible to avoid to excessively lower the viscosity and to form an electrode having excellent adhesiveness.

The water-soluble resin, particularly PVA, may contain a unit derived from a different monomer other than the vinyl alcohol unit and the unit derived from the monomer (a) as long as the effects of the present invention are not impaired. Examples of a unit derived from a different monomer include units derived from the following: $\alpha$-olefins such as ethylene, propylene, n-butene, and isobutylene; vinyl ethers such as methyl vinyl ether, ethyl vinyl ether, n-propyl vinyl ether, i-propyl vinyl ether, n-butyl vinyl ether, i-butyl vinyl ether, t-butyl vinyl ether, and 2,3-diacetoxy-1-vinyloxypropane; vinyl cyanides such as acrylonitrile and methacrylonitrile; vinyl halides such as vinyl chloride and vinyl fluoride; halogenated vinylidenes such as vinylidene chloride and vinylidene fluoride; allyl compounds such as allyl acetate, 2,3-diacetoxy-1-allyloxypropane, and allyl chloride; and isopropenyl acetate. The content of the unit derived from the other monomer in the water-soluble resin, particularly in PVA, may be, for example, 15 mol% or less based on the number of moles of all monomer units constituting the water-soluble resin.

The sequence order of the vinyl alcohol unit, the unit derived from the monomer (a), and the unit derived from the other monomer described above in the water-soluble resin, particularly in PVA, is not particularly limited, and may be a random, block, or alternate arrangement.

The primary structure of the water-soluble resin can be quantified by $^1$H-NMR.

The lower limit of the degree of saponification (mole fraction of hydroxyl groups relative to the sum of hydroxyl groups and ester bonds in the water-soluble resin) of the water-soluble resin, particularly in PVA, is preferably 20% by mol or more, more preferably 60% by mol or more, still more preferably 70% by mol or more, even more preferably 75% by mol or more, yet more preferably 80% by mol or more. The degree of saponification can be measured according to JIS-K6726: 1994, as in the Examples described later.

The upper limit of the viscosity average degree of polymerization of the water-soluble resin, particularly in PVA, is preferably 5000 or less, more preferably 4000 or less. Meanwhile, the lower limit of the viscosity average degree of polymerization of the water-soluble resin is preferably 100 or more, more preferably 500 or more, still more preferably 1000 or more. In a case in which the water-soluble resin has a crosslinked structure, it is preferable that the viscosity average degree of polymerization of the water-soluble resin before crosslinking is within the above-described range. When the viscosity average degree of polymerization of the water-soluble resin is high, the viscosity of the solution in a given aqueous solution state or a given NMP solution state increases. In addition, when the viscosity average degree of polymerization of the water-soluble resin is high, TI of the solution in a given aqueous solution state or a given NMP solution state can be easily adjusted within the above-described range. As the viscosity average degree of polymerization of the water-soluble resin is 100 or more, the viscosity and TI of a binder containing a water-soluble resin in an aqueous solution or NMP solution state can be easily adjusted within a given range without being excessively reduced such that the adhesiveness of an adhesive layer formed by a slurry comprising the binder which contains the water-soluble resin can be improved. Meanwhile, as the viscosity average degree of polymerization of the water-soluble resin is 5000 or less, the viscosity and TI in an aqueous solution or NMP solution state do not excessively increase, and further, productivity of the water-soluble resin is improved such that it becomes possible to produce the water-soluble resin at a lower cost.

The viscosity average degree of polymerization (P) of the water-soluble resin can be calculated by completely saponifying and purifying the water-soluble resin, and then measuring the intrinsic viscosity [η] (unit: L/g) in a sodium chloride aqueous solution (0.5 mol/L) at 30°C for a water-soluble resin containing a unit derived from the monomer (a) or the intrinsic viscosity [η] (unit: L/g) in an aqueous solution at 30°C for a water-soluble resin not containing a unit derived from the monomer (a). From this intrinsic viscosity [η], the viscosity average degree of polymerization (P) of the water-soluble resin can be determined by the following formula.

$$P = ([\eta] \times 104/8.29)(1/0.62)$$

Hereinafter, an example of a method of producing PVA, which is a water-soluble resin, will be described.

The step of producing PVA comprises, for example, a step of polymerizing a monomer including a vinyl ester-based monomer (hereinafter also simply referred to as "polymerization step") and a step of saponifying the vinyl ester-based polymer obtained by the polymerization step (hereinafter also simply referred to as "saponification step"). It is preferable that the step further comprises a step of heating a vinyl ester polymer or PVA after saponification (hereinafter also simply referred to as "heating step").

In the polymerization step, a monomer including a vinyl ester-based monomer is polymerized, thereby synthesizing a vinyl ester-based polymer. The monomer used in the polymerization step may be only a vinyl ester-based monomer, as described above, or, the vinyl ester-based monomer and the monomer (a) and/or another monomer may be used.

The polymerization method of the monomer including a vinyl ester-based monomer may be any of batch polymerization, semi-batch polymerization, continuous polymerization, and semi-continuous polymerization. As the polymerization method, any known method such as a bulk polymerization method, a solution polymerization method, a suspension polymerization method, and an emulsion polymerization method can be employed. Among these, a bulk polymerization method or a solution polymerization method in which the polymerization proceeds without a solvent or in a solvent such as alcohol is usually employed. In the case of obtaining a vinyl ester-based polymer having a high polymerization degree, an emulsion polymerization method may be employed. The solvent used in the solution polymerization method is not particularly limited, and examples thereof include alcohol. The alcohol used as the solvent in the solution polymerization method is a lower alcohol such as methanol, ethanol, n-propanol, or the like. The solvents may be used singly or in combination of two or more. The amount of the solvent used in the polymerization system may be selected in consideration of the chain transfer of the solvent according to the polymerization degree of PVA of interest and the like. For example, in a case in which the solvent is methanol, the lower limit of the mass ratio of the solvent to all the monomers contained in the polymerization system {= (solvent) / (all monomers)} is preferably 0.01 or more, more preferably 0.05 or more. Meanwhile, the upper limit of the mass ratio is preferably 10 or less, more preferably 3 or less.

As a polymerization initiator used for polymerization may be selected as appropriate from known polymerization initiators, for example, an azo-based initiator, a peroxide-based initiator, a redox-based initiator, and the like, depending on the polymerization method. Examples of an azo-based initiator include 2,2'-azobisisobutyronitrile, 2,2'-azobis(2,4-dimethylvaleronitrile), and 2,2'-azobis(4-methoxy-2,4-dimethylvaleronitrile). Examples of a peroxide-based initiator include: percarbonate compounds such as diisopropyl peroxydicarbonate, di-2-ethylhexyl peroxydicarbonate, and diethoxyethyl peroxydicarbonate; perester compounds such as t-butyl peroxyneodecanoate, α-cumyl peroxyneodecanoate, and t-butyl peroxydecanoate; acetyl peroxide, acetyl cyclohexyl sulfonyl peroxide, and 2,4,4-trimethylpentyl-2-peroxy phenoxyacetate. Further, potassium persulfate, ammonium persulfate, hydrogen peroxide, and the like may be combined with these initiators and use it as an initiator. Examples of a redox-based initiator include a combination of the above-described peroxide-based initiator and a reducing agent such as sodium bisulfite, sodium hydrogen carbonate, tartaric acid, L-ascorbic acid, or longalit.

The amount of the polymerization initiator used cannot be unconditionally determined because it differs depending on a polymerization catalyst and the like, but it may be appropriately selected depending on, for example, the polymerization rate. For example, in a case in which 2,2'-azobisisobutyronitrile or acetyl peroxide is uses as the polymerization initiator, the lower limit of the amount of the polymerization initiator used is preferably 0.01% by mol or more, more preferably 0.02% by mol or more with respect to the vinyl ester-based monomer. Meanwhile, the upper limit of the amount of the polymerization initiator used is preferably 0.2% by mol or less, more preferably 0.15% by mol or less.

The lower limit of the temperature in the polymerization step is preferably 0°C or higher, more preferably 30°C or higher. The upper limit of the polymerization temperature is preferably 200°C or lower, more preferably 140°C or lower. As the polymerization temperature is 0°C or higher, the polymerization rate can be improved. Meanwhile, as the polymerization temperature is 200°C or lower, for example, it becomes easy to maintain the content of the unit derived from the monomer (a) in the water-soluble resin at an appropriate ratio also in the case of using the monomer (a). Examples of the method of controlling the polymerization temperature within the above-described range include a method in which the heat generated by polymerization and the heat radiation from the surface of a reactor are balanced by controlling the polymerization rate and a method in which the polymerization temperature is controlled by an outer jacket using an appropriate heat medium. From the safety viewpoint, the latter method is preferable.

The polymerization may be carried out in the presence of a chain transfer agent as long as the effects of the present invention are not impaired. Examples of a chain transfer agent can include: aldehydes such as acetaldehyde and propionaldehyde; ketones such as acetone and methyl ethyl ketone; mercaptans such as 2-hydroxyethanethiol; halogenated hydrocarbons such as trichlorethylene and perchloroethylene; and phosphinates such as sodium phosphinate monohydrate. Of these, aldehydes and ketones are preferred. The amount of the chain transfer agent added to the polymerization system can be determined according to the chain transfer coefficient of the chain transfer agent to be added, the polymerization degree of a water-soluble resin of interest, and the like. In general, it is preferably from 0.1 parts by mass to 10 parts by mass with respect to 100 parts by mass of the vinyl ester-based monomer.

In a case in which polymerization has been performed at a high temperature, for example, in the case of using PVA as the water-soluble resin, coloration of PVA due to decomposition of the vinyl ester-based monomer may be observed. In this case, for the purpose of preventing coloration, an antioxidant such as tartaric acid can be added to the polymerization system at from about 1 ppm to 100 ppm with respect to the vinyl ester-based monomer.

In the saponification step, for example, in a case in which PVA is used as the water-soluble resin, the vinyl ester-based polymer is saponified. By saponifying the polymer, the vinyl ester units in the polymer are converted to vinyl alcohol units.

The reaction used for saponification is not particularly limited, and it is possible to employ, for example, a known alcoholysis or hydrolysis reaction carried out in a state in which the vinyl ester-based polymer is dissolved in a solvent.

Examples of a solvent used for saponification may include: lower alcohols such as methanol and ethanol; esters such as methyl acetate and ethyl acetate; ketones such as acetone and methyl ethyl ketone; and aromatic hydrocarbons such as benzene and toluene. These solvents may be used singly or in combination of two or more. Of these, any of methanol and a mixed solution of methanol and methyl acetate is preferable.

Examples of a catalyst used for saponification can include: alkali catalysts such as alkali metal hydroxides (e.g., potassium hydroxide and sodium hydroxide) and sodium alkoxides (e.g., sodium methoxide); and acid catalysts such as p-toluenesulfonic acid and mineral acid. Of these, sodium hydroxide is preferable because it is easy to use.

The temperature at which saponification is carried out is not particularly limited, but is preferably from 20°C to 60°C. In a case in which a product in the form of gel precipitates as the saponification progresses, it is preferable to pulverize the product and further proceed with saponification. Then, by neutralizing the obtained solution to terminate saponification and washing and drying the neutralized solution, a water-soluble resin can be obtained. The saponification method is not limited to the above-described method, and other known methods can be employed.

In the heating step, for example, in a case in which PVA is used as the water-soluble resin, the vinyl ester-based polymer or PVA is heated. Specifically, the vinyl ester-based polymer is heated by heating at the same time as the saponification step, or the PVA obtained after the saponification step is terminated is heated. By this heating, PVA having a crosslinked structure can be easily obtained, and the higher the heating temperature and the longer the heating time, the more crosslinked structures are formed and the viscosity increases. By adjusting the conditions of the heating step, the viscosity of the binder containing PVA in a solution state can be easily adjusted within a predetermined range such that the adhesiveness of an adhesive layer formed from the slurry comprising the binder which contains PVA is further improved. The heat treatment is preferably carried out in an air or nitrogen atmosphere. In addition, the heating step is preferably performed after saponification.

The lower limit of the heating temperature in the heating step is preferably 70°C or higher, more preferably 90°C or higher. The upper limit of the heating temperature is preferably 170°C or lower, more preferably 150°C or lower. The lower limit of the heating time in the heating step is preferably 30 minutes or more, more preferably 1 hour or more, still more preferably 2 hours or more. The upper limit of the heating time is preferably 10 hours or less, more preferably 7 hours or less, still more preferably 5 hours or less. Increasing the heating temperature or increasing the heating time increases the viscosity and TI in a given aqueous solution or NMP solution state. By setting the heating temperature to 170°C or lower and/or the heating time to 10 hours or less, it is possible to prevent the formation of insoluble components when the mixture is later dissolved in water or NMP.

The binder of the present invention may further comprise a material for adjusting the viscosity of the binder in an aqueous solution state or an NMP solution state. Examples of a material for adjusting the viscosity include polyvalent basic acids such as citric acid, tartaric acid, and aspartic acid and salts or condensates thereof, and inorganic substances such as fumed silica and alumina. The addition amounts thereof are not particularly limited, but they are usually preferably from 0.01 parts by mass to 10 parts by mass, more preferably from 0.02 parts by mass to 8 parts by mass, still more preferably from 0.05 parts by mass to 5 parts by mass with respect to 100 parts by mass of PVA. The more the material for adjusting the viscosity is contained, the more the viscosity and TI of the binder of the present invention in a solution state can be increased, and the more easily the material can be adjusted within a predetermined range. The smaller the particle size of the inorganic substance, the easier it is to increase the viscosity and TI of the binder in an aqueous solution state or an NMP solution state.

The binder of the present invention or the non-aqueous electrolyte cell electrode binder solution of the present invention described later may further comprise a compounding agent as long as the effects of the present invention are not impaired. Examples of a compounding agent include a light stabilizer, a UV absorber, a freeze stabilizer, a thickeners, a leveling agent, a rheology stabilizer, a thixotropic agent, a defoamer, a plasticizer, a lubricant, a preservative, an antirust agent, an antistatic agent, an anti-charging agent, an anti-yellowing agent, a pH adjuster, a film-forming aid, a curing catalyst, a cross-linking reaction catalyst, a cross-linking agent (e.g., glyoxal, urea resin, melamine resin, multivalent metal salt, polyisocyanate, or polyamide epichlorohydrin), and a dispersant. They can be selected or combined according to their purposes. The content of the compounding agent is, for example, 10% by mass or less, preferably 5% by mass or less, more preferably 1% by mass or less based on the total amount of the binder or the non-aqueous electrolyte cell electrode binder solution.

The binder of the present invention may also be obtained by dissolving a water-soluble resin, particularly PVA, and components other than the water-soluble resin as necessary in a solvent (water or NMP) to prepare a solution, and removing the solvent. In addition, the solution may be subsequently used as is for the preparation of a slurry as the non-aqueous electrolyte cell electrode binder solution of the present invention described later. In such a case, the composition of components other than the solvent in the binder solution is the binder of the present invention. The binder of the present invention is contained in a cured product of the slurry composition of the present invention in a state of being mixed with components such as an active material.

<Non-Aqueous Electrolyte Cell Electrode Binder Solution>

The non-aqueous electrolyte cell electrode binder solution of the present invention (hereinafter also simply referred to as "binder solution" or "binder solution of the present invention") is a non-aqueous electrolyte cell electrode binder solution comprising the binder of the present invention and water, and the viscosity thereof at a shear rate of 10 $s^{-1}$ at 25°C is from 4 Pa·s to 30 Pa·s, and TI defined by a viscosity ratio between a viscosity at a shear rate of 10 $s^{-1}$ and a viscosity at a shear rate of 100 $s^{-1}$ at 25°C is from 1.8 to 5. In other words, the binder aqueous solution also encompasses not only a binder aqueous solution having a solid content concentration of 10% by mass but also a binder aqueous solution having a solid content concentration within a specific range that may satisfy the viscosity range under the above-described conditions thereof and the TI range under the above-described conditions thereof.

Alternatively, another non-aqueous electrolyte cell electrode binder solution of the present invention is a non-aqueous electrolyte cell electrode binder solution comprising the binder of the present invention and N-methyl-2-pyrrolidone, and the viscosity thereof at a shear rate of 10 $s^{-1}$ at 25°C is from 4 Pa·s to 35 Pa·s, and TI defined by a viscosity ratio between a viscosity at a shear rate of 10 $s^{-1}$ and a viscosity at a shear rate of 100 $s^{-1}$ at 25°C is from 2 to 6. In other words, the binder NMP solution also encompasses not only a binder NMP solution having a solid content concentration of 7.5% by mass but also a binder NMP solution having a solid content concentration within a specific range that may satisfy the viscosity range under the above-described conditions thereof and the TI range under the above-described conditions thereof.

As described above, the binder solution of the present invention contains the binder of the present invention and at least one solvent. The solvent is water or NMP. In a case in which the solvent is water, it is suitable from the viewpoint of reducing the environmental load and the convenience of the facility. Meanwhile, in a case in which the solvent is NMP, it is preferable because it does not deteriorate the active material in the slurry, especially when it is applied as a positive electrode slurry.

In addition to the binder of the present invention described above, the binder solution may contain an additive (referred to as "additive A") that can be dissolved in a solvent, as long as the effects of the present invention are not impaired. Examples of an additive A include polyethylene glycol, polyethylene glycol dimethyl ether, polyethylene glycol diglycidyl ether, and polyethyleneimine. The content of the additive A is, for example, 10% by mass or less, preferably 5% by mass or less, more preferably 1% by mass or less based on the total amount of the binder solution. It is particularly preferable that such an additive A is not contained.

The binder solution can be obtained by mixing a water-soluble resin such as PVA, a solvent (water or NMP), and components other than the aqueous resin as described above, which are contained as necessary, by a known method, for example, stirring. The mixing temperature and mixing time can be adjusted as appropriate according to the type of solvent. The binder solution means a solution in which the above-described water-soluble resin is dissolved in a solvent. The state of being dissolved means a state in which the mass of the water-soluble resin, particularly PVA, completely dissolved in the solvent is preferably 80% by mass or more, more preferably 90% by mass or more, still more preferably 95% by mass or more, even more preferably 99% by mass or more, yet more preferably 100% by mass with respect to the total mass of the water-soluble resin used for producing the binder solution (100% by mass)

The content of the water-soluble resin, particularly PVA, in the binder solution of the present invention is preferably from 1% by mass to 30% by mass, more preferably from 3% by mass to 20% by mass, particularly preferably from 5% by mass to 15% by mass based on the total amount of the binder solution. When the content of the water-soluble resin is 1% by mass or more, it is easy to improve the adhesiveness of an active material to a current collector when forming an electrode. When the content of the water-soluble resin is 30% by mass or less, it is possible to prevent an active material from rapidly aggregating when forming an electrode.

<Non-Aqueous Electrolyte Cell Electrode Slurry>

The non-aqueous electrolyte cell electrode slurry of the present invention comprises the binder solution of the present invention described above and the active material.

The slurry of the present invention may be used for any of a positive electrode and a negative electrode. It may be used for both positive and negative electrodes. Therefore, the active material may be either a positive electrode active material or a negative electrode active material. It is preferable that in a case in which the binder solution of the present invention contains water (i.e., water is used as a solvent), it contains a negative electrode active material and is used as a negative electrode slurry. It is preferable that in a case in which the binder solution of the present invention contains NMP (i.e., NMP is used as a solvent), it contains a positive electrode active material and is used as a positive electrode slurry.

As the negative electrode active material, for example, a material conventionally used as a negative electrode active material for a non-aqueous electrolyte cell can be used. Examples thereof include: carbon materials such as amorphous carbon, artificial graphite, natural graphite (graphite), mesocarbon microbeads (MCMB), pitch-based carbon fiber, carbon black, activated carbon, carbon fiber, hard carbon, soft carbon, mesoporous carbon, and conductive polymers such as polyacene; composite metal oxides represented by $SiO_x$, $SnO_x$, and $LiTiO_x$, other metal oxides, and lithium-based metals such as lithium metals and lithium alloys; metal compounds such as $TiS_2$ and $LiTiS_2$; and composite materials of metal oxides and carbonaceous materials. Of these, from the viewpoints of economy and cell capacity, graphite is preferable, and spherical natural graphite is particularly preferable. These negative electrode active materials can be used singly or in combination of two or more.

As the positive electrode active material, for example, a material conventionally used as a positive electrode active material for a non-aqueous electrolyte cell can be used. Examples thereof include: transition metal oxides such as $TiS_2$, $TiS_3$, amorphous $MoS_3$, $Cu_2V_2O_3$, amorphous $V_2O$-$P_2O_5$, $MoO_3$, $V_2O_5$, and $V_6O_{13}$; and Lithium-containing composite metal oxides such as $LiCoO_2$, $LiNiO_2$, $LiMnO_2$, and $LiMn_2O_4$. These positive electrode active materials can be used singly or in combination of two or more.

The slurry may comprise a conductive agent. A conductive agent is used for increasing the output of the non-aqueous electrolyte cell, and can be selected as appropriate depending on the case in which it is used for a positive electrode or a negative electrode. Examples thereof include graphite, acetylene black, carbon black, ketjen black, and vapor deposition carbon fiber. Of these, acetylene black is preferable from the viewpoint that the obtained non-aqueous electrolyte cell can easily increase the output.

In a case that the slurry comprises a conductive agent, the content of the conductive agent is preferably from 0.1 parts by mass to 15 parts by mass, more preferably from 1 part by mass to 10 parts by mass, still more preferably from 3 parts by mass to 10 parts by mass with respect to 100 parts by mass of the active material. When the content of the conductive agent is within this range, a sufficient effect of aiding conductivity can be obtained without lowering the capacity of a cell to which the slurry is applied.

The content of the binder in the slurry is preferably from 0.1 parts by mass to 20 parts by mass with respect to 100 parts by mass of the active material. When the content is 0.1 parts by mass or more, the adhesiveness of the active material to the current collector is improved, which is advantageous from the viewpoint of maintaining the durability of a cell to which the slurry is applied. Further, when the content is 20 parts by mass or less, discharge capacity is likely to be improved. The range of the content is more preferably from 0.2 parts by mass to 18 parts by mass, still more preferably from 0.5 parts by mass to 16 parts by mass, even more preferably from 1 part by mass to 12 parts by mass.

The slurry may comprise additives such as a flame retardant aid, a thickener, a defoamer, a leveling agent, and an adhesion imparting agent as necessary, in addition to a binder, an active material, a conductive agent, and a solvent. In a case that the slurry comprises these additives, the content of the additives is preferably from about 0.1% by mass to 10% by mass based on the total amount of the slurry.

The slurry can be obtained by mixing a binder, an active material, and as necessary, a conductive agent, a solvent, and additives by an ordinary method using, for example, a mixer such as a ball mill, a blender mill, or a three roll mill.

<Non-Aqueous Electrolyte Cell Electrode>

The non-aqueous electrolyte cell electrode of the present invention comprises a cured product of the above-described slurry of the present invention and a current collector. A cured product of the slurry is a cured product obtained by removing the solvent in the slurry by drying or the like.

The electrodes (positive and negative electrodes) according to the present invention have excellent adhesiveness of the active material to the current collector. Therefore, the peeling strength of each electrode before being immersed in an electrolytic solution is preferably 30 N/m or more, more preferably 50 N/m or more, still more preferably 60 N/m or more, and particularly preferably 70 N/m or more. In particular, in the case of the positive electrode, the adhesiveness is more excellent, and the peeling strength is preferably 300 N/m or more, more preferably 500 N/m or more, still more preferably 600 N/m or more, and particularly preferably 700 N/m or more. The upper limit of the peeling strength of the electrode is 1000 N/m or less.

The electrodes can be obtained by applying the slurry of the present invention to a current collector and removing the solvent by drying or the like. Further, the electrodes may be rolled after drying.

The current collector is not particularly limited as long as it is made of a conductive material. Examples thereof include metal materials such as iron, copper, aluminum, nickel, stainless steel, titanium, tantalum, gold, and platinum. These current collectors can be used singly or in combination of two or more. Of these current collectors, copper is preferable as a negative electrode current collector, and aluminum is preferable as a positive electrode current collector, from the viewpoint of the adhesiveness of the active material and the discharge capacity.

The method of applying the slurry to the current collector is not particularly limited, and examples thereof include an extrusion coater, a reverse roller, a doctor blade, and an applicator. The coating amount of the slurry is selected as appropriate according to the desired thickness of the cured product derived from the slurry composition.

Examples of a method of rolling an electrode include mold pressing and roll pressing. The pressing pressure is preferably from 1 MPa to 40 MPa from the viewpoint of easily increasing cell capacity.

The thickness of the current collector of the electrode according to the present invention is preferably from 1 $\mu$m to 20 $\mu$m, more preferably from 2 $\mu$m to 15 $\mu$m. The thickness of the cured product is preferably from 10 $\mu$m to 400 $\mu$m, more preferably from 20 $\mu$m to 300 $\mu$m. The thickness of the electrode is preferably from 20 $\mu$m to 200 $\mu$m.

<Non-Aqueous Electrolyte Cell>

The non-aqueous electrolyte cell of the present invention comprises the above-described non-aqueous electrolyte cell electrode of the present invention as a negative electrode and/or a positive electrode.

Examples of the cell of the present invention include a lithium-ion cell, a sodium-ion cell, a lithium-sulfur cell, an all-solid-state cell, a lithium ion capacitor, and a lithium cell.

The cell of the present invention has a high discharge capacity, and the discharge capacity can be maintained even after repeated charging and discharging. The capacity retention rate (discharge capacity retention rate) of the cell of the present invention is preferably 80% or more, more preferably 90% or more, still more preferably 95% or more, even more preferably 98% or more, yet more preferably 99% or more.

The discharge capacity retention rate of a cell can be calculated using, for example, a method in which a charge/discharge test is conducted using a commercially available charge/discharge tester as shown in the Examples described later.

The electrolytic solution which the cell comprises is a solution that dissolves an electrolyte in a solvent. The electrolyte may be in the form of liquid or gel as long as it is used in a usual non-aqueous electrolyte cell, and an electrolyte that exhibits a function as a cell may be selected as appropriate depending on types of the negative electrode active material and the positive electrode active material. As a specific electrolyte, for example, a known lithium salt can be used as appropriate, and examples thereof include $LiClO_4$, $LiBF_6$, $LiPF_6$, $L_1CF_3SO_3$, $LiCF_3CO_2$, $LiAsF_6$, $LiSbF_6$, $LiB_{10}Cl_{10}$, $LiAlCl_4$, $LiCl$, $LiBr$, $LiB(C_2H_5)_4$, $CF_3SO_3Li$, $CH_3SO_3Li$, $LiCF_3SO_3$, $LiC_4F_9SO_3$, $Li(CF_3SO_2)_2N$, and a lower aliphatic lithium carboxylate.

A solvent which the electrolytic solution comprises is not particularly limited. Specific examples thereof include: carbonates such as propylene carbonate, ethylene carbonate, butylene carbonate, dimethyl carbonate, ethyl methyl carbonate, diethyl carbonate, and vinylene carbonate; lactones such as $\gamma$-butyl lactone; ethers such as trimethoxymethane, 1,2-dimethoxyethane, diethyl ether, 2-ethoxyethane, tetrahydrofuran, and 2-methyltetrahydrofuran; sulfoxides such as dimethyl sulfoxide; oxolanes such as 1,3-dioxolane and 4-methyl-1,3-dioxolane; nitrogen-containing compounds such as acetonitrile and nitromethane; organic acid esters such as methyl formate, methyl acetate, ethyl acetate, butyl acetate, methyl propionate, and ethyl propionate; inorganic acid esters such as triethyl phosphate, dimethyl carbonate, and diethyl carbonate; diglymes; triglymes; sulfolanes; oxazolidinones such as 3-methyl-2-oxazolidinone; and sultones such as 1,3-propane sultone, 1,4-butan sultone, and naphthasultone. These can be used singly or in combination of two or more. When using an electrolytic solution in the form of gel, a nitrile-based polymer, an acrylic-based polymer, a fluorine-based polymer, an alkylene oxide-based polymer, or the like can be added as a gelling agent.

In the case of using the electrode of the present invention for either a positive electrode or a negative electrode, a conventional electrode can be used for the other electrode that is not the electrode of the present invention to be used.

In one preferred embodiment, the cell of the present invention comprises the electrode of the present invention as a negative electrode and a conventional electrode as a positive electrode. The positive electrode is not particularly limited as long as it is a positive electrode usually used for non-aqueous electrolyte cells.

Alternatively, in another preferred embodiment, the cell of the present invention comprises the electrode of the present invention as a positive electrode and a conventional electrode as a negative electrode. The negative electrode is not particularly limited as long as it is a negative electrode usually used for non-aqueous electrolyte cells. In this case, it is preferable that the binder solution of the present invention contained in the slurry of the present invention which is used for forming a positive electrode is a binder solution containing the binder of the present invention and N-methyl-2-pyrrolidone, and the viscosity thereof at a shear rate of 10 s$^{-1}$ at 25°C is from 4 Pa·s to 35 Pa·s, and TI defined by a viscosity ratio between a viscosity at a shear rate of 10 s$^{-1}$ and a viscosity at a shear rate of 100 s$^{-1}$ at 25°C is from 2 to 6. This is because as the solvent in the slurry is NMP, it is possible to prevent deterioration of the positive electrode active material in the slurry, and as the viscosity and TI under the above-described conditions for the binder NMP solution fall within the respective specific ranges described above, it is possible to further improve the peeling strength of the positive electrode.

In addition, both positive and negative electrodes may be an electrode comprising the binder of the present invention.

The method of producing the cell of the present invention is not particularly limited, but for example, the cell can be produced as follows. Specifically, a negative electrode and a positive electrode are overlapped with each other via a separator such as a porous polypropylene membrane, wound and/or folded according to the shape of the cell, and placed in a cell container, and then an electrolytic solution is injected into the container and seal the container. The shape of the cell may be any of known coin type, button type, sheet type, cylindrical type, square type, flat type, or the like.

The cell of the present invention is useful in various applications. For example, it is particularly useful as a battery cell used in mobile terminals that require downsizing, thinning, weight reduction, and high performance. Further, it can be used as appropriate for batteries of equipment requiring flexibility, for example, winding-type dry-cell batteries and laminated-type batteries.

Examples

Examples of the present invention will be described below, but the present invention is not limited thereto. "%" in the Examples is related to mass unless otherwise specified. First, the measurement method and the evaluation method are shown below. The physical property values (or evaluation values) described herein are based on the values obtained by the following methods.

Physical property values of PVAs used in the Examples the Comparative Examples described later, evaluation values of a binder aqueous solution containing each PVA and an NMP solution, evaluation of negative electrode slurry, evaluation in application to electrodes, and evaluation in application to cells were determined according to the following methods.

<Degree of modification of PVA in Binder>

The degree of modification of PVA used in each of the Examples and the Comparative Examples (content of units derived from monomer (a) based on the number of moles of all monomer units in each PVA) was determined using a vinyl ester-based polymer, which is a precursor of each PVA, by the method using $^{1}$H-NMR.

<Degree of saponification of PVA in Binder>

The degree of saponification of PVA used in each of the Examples and the Comparative Examples described later was determined according to JIS-K6726:1994.

<Polymerization Degree of PVA in Binder>

The polymerization degree (viscosity average degree of polymerization) of PVA used in each of the Examples and the Comparative Examples described later was determined according to the method described in JIS-K6726:1994.

For example, in a case in which monomethyl maleate is used as the monomer (a), the above-described content can be determined by the following procedure. Specifically, a vinyl ester-based polymer, which is a precursor of PVA, is sufficiently purified by reprecipitation three times or more using n-hexane/acetone as a solvent, following which the obtained purified product is dried under reduced pressure at 50°C for 2 days, thereby producing a sample for analysis. This sample is dissolved in CDCl$_3$ and measured at room temperature using $^1$H-NMR. From peak α derived from the methine structure of a vinyl ester unit in a vinyl ester-based polymer (4.7 to 5.2 ppm) and peak β derived from the methyl group of the methyl ester moiety of a unit derived from the monomer (a) (3.6 to 3.8 ppm), the content S of the unit derived from the monomer (a) can be calculated using the following formula.

$$S \text{ (\% by mol)} = \{(\text{proton number of } \beta/3)/(\text{proton number of } \alpha + (\text{proton number of } \beta/3))\} \times 100$$

<Viscosity Measurement and TI Calculation for Binder Aqueous Solution and NMP Solution>

Using a binder aqueous solution having a solid content concentration of 10% by mass and a binder NMP solution having a solid content concentration of 7.5% by mass prepared in each of the Examples and the Comparative Examples described later as a measurement sample, the viscosity at 25°C was measured at shear rates of 10 s$^{-1}$ and 100 s$^{-1}$ using an E-type viscometer (manufactured by Brookfield). Further, TI defined by a viscosity ratio between a viscosity at a shear rate of 10 s$^{-1}$ and a viscosity at a shear rate of 100 s$^{-1}$ at 25°C was calculated from each measured value.

<Evaluation of Stability in Negative Electrode Slurry>

In order to confirm stability in a negative electrode slurry prepared in each of the Examples and the Comparative Examples described later, the state of particle sedimentation immediately after the preparation of the negative electrode slurry (1 hour later) was visually confirmed. The slurry in which no sedimentation was confirmed was evaluated as "o", and the slurry in which sedimentation was confirmed was evaluated as "×".

<Measurement of Peeling Strength (N/m) of Lithium Secondary Cell in Application to Negative Electrode and Positive Electrode>

For lithium secondary cell electrodes (negative and positive electrodes) produced in each of the Examples and the Comparative Examples described later, the strength of peeling of a cured product (portion derived from the slurry prepared in each of the Examples and the Comparative Examples) from copper foil (negative electrode) or aluminum foil (positive electrode) that is a current collector was measured. Specifically, the slurry-coated surface of each obtained lithium secondary cell electrode and a stainless steel plate were bonded together using double-sided tape (double-sided tape made by NICHIBAN Co., Ltd.), and a 180° peeling strength (peeling width: 10 mm; peeling speed: 100 mm/min) was measured using a 50 N load cell (manufactured by IMADA Co., Ltd.).

<Measurement of Discharge Capacity Retention Rate (%) of Lithium Secondary Cell in Application to Negative Electrode and Positive Electrode>

For a coin cell produced in each of the Examples and the Comparative Examples described later, a rate test was carried out using a commercially available charge/discharge tester (TOSCAT3100, manufactured by TOYO SYSTEM Co., LTD.). The resistance value when a current of 0.1 mA was passed for 3 seconds before the initial charging was defined as the DC resistance. In charging, a constant current charge of 0.2 C (about 1 mA/cm$^2$) was performed, and then a constant voltage charge of 0 V was performed up to a current of 0.02 mA with respect to the lithium potential. In discharging, a constant current discharge of 0.2 C (about 0.5 mA/cm$^2$) was performed up to 1.5 V with respect to the lithium potential. The coin cell was placed in a constant temperature bath at 25°C, and after performing the initial charging/discharging for 3 cycles under the above-described conditions, the discharge rate was changed to 2C and charging/discharging was performed for 1 cycle. The ratio of the discharge capacity of 2C to the discharge capacity of 0.2C at this time was defined as the discharge capacity retention rate (%).

<Measurement of DC resistance (Ω) of Lithium Secondary Cell in Application to Negative Electrode>

For a coin cell produced in each of the Examples and the Comparative Examples described later, a measurement of DC resistance was carried out using a commercially available charge/discharge tester (TOSCAT3100, manufactured by TOYO SYSTEM Co., LTD.) as in the measurement of the discharge capacity retention rate (%) described above. The DC resistance value was evaluated by adopting the resistance value after one charge (full-charge state).

<Evaluation of NMP Solubility of Binder Solution for Positive Electrode>

In order to confirm NMP solubility in a binder NMP solution for the application to positive electrodes prepared in each of the Examples and the Comparative Examples described later, the state of PVA being dissolved by adding 92.5 parts by mass of NMP to 7.5 parts by mass of PVA while stirring and raising the temperature to 80°C was visually observed. The time from the start of raising the temperature to complete dissolution was measured, and the NMP solubility was evaluated according to the following criteria. If the evaluation is A or B, it can be used as a binder and is excellent in practicality.

   A: Completely dissolved in less than 2 hours.
   B: Completely dissolved in 2 hours or more and less than 4 hours.
   C: Not completely dissolved with the residue remaining undissolved.

<Evaluation of Uniformity in Application to Positive Electrode>

In order to evaluate uniformity of a positive electrode produced in each of the Examples and the Comparative Examples described later, the condition of the positive electrode surface was visually confirmed. A positive electrode having a uniform surface and no unevenness was evaluated as "○", and a positive electrode having coarse particles generated by aggregation of the active material and having unevenness on the electrode was evaluated as "×".

(Production of PVA)

[PVA-1]

A reactor equipped with a stirrer, a reflux condenser, a nitrogen introduction tube, a dropping port for a comonomer, and an addition port for a polymerization initiator was charged with 740 parts by mass of vinyl acetate and 260 parts by mass of methanol, and the air inside of the system was replaced with nitrogen for 30 minutes while bubbling with nitrogen. Itaconic anhydride was selected as the monomer (a), and a methanol solution of itaconic anhydride (at a concentration of 20%) was replaced with nitrogen by bubbling with nitrogen gas. Raising the temperature of the reactor was initiated, and when the internal temperature reached 60°C, 0.25 parts by mass of 2,2'-azobisisobutyronitrile (AIBN) was added, thereby initiating polymerization. A methanol solution of the itaconic anhydride was added dropwise to the reactor, and the polymerization was carried out at 60°C for 3 hours while keeping the monomer composition ratio in the polymerization solution constant, and then cooling was performed to terminate the polymerization. The total amount of the monomer (a) added until the polymerization was terminated was 2.6 parts by mass, and the solid content concentration at the time of the termination of polymerization was 33.3%. Subsequently, the unreacted monomer was removed while occasionally adding methanol at 30°C under reduced pressure, thereby obtaining a methanol solution (at a concentration of 35%) of the vinyl ester-based polymer. Next, methanol is further added to the obtained methanol solution to prepare a methanol solution of a vinyl ester-based polymer, and then 9.2 parts by mass of a 10% methanol solution of sodium hydroxide was added to 790.8 parts by mass of the methanol solution of a vinyl ester-based polymer (the solution contained 200.0 parts by mass of the polymer), and saponification was performed at 40°C. The polymer concentration of the saponification solution was 25%, and the molar ratio of sodium hydroxide to the vinyl acetate unit in the polymer was 0.010. After adding the methanol solution of sodium hydroxide, a gel-like material was formed in about 15 minutes. This was pulverized with a pulverizer and left at 40°C for 1 hour, thereby proceeding with saponification. Then, 500 parts by mass of methyl acetate was added so as to neutralize the remaining alkali. After confirming that the neutralization was completed using a phenolphthalein indicator, the mixture was filtered, thereby obtaining a white solid. To this white solid, 2000 parts by mass of methanol was added, and the mixture was left at room temperature for 3 hours and then washed. After repeating this washing operation three times, the white solid obtained by centrifugal dehydration was heat-treated at 120°C for 4.5 hours in a dryer, thereby obtaining PVA-1. Table 1 summarizes various production materials of PVA-1 and their physical properties.

[PVA-2 to PVA-8]

Various PVAs were produced in the same manner as in the method for producing PVA-1 except that polymerization conditions including the amounts of vinyl acetate and methanol charged, type of monomer (a) used upon polymerization and its addition amount, and the polymerization rate (reaction rate (%) of monomer (vinyl acetate and monomer (a)) at the time of polymerization termination calculated based on $100 \times$ mass of vinyl ester-based polymer at the time of polymerization termination/amount of monomer charged) and saponification conditions including the molar ratio of sodium hydroxide were changed as shown in Table 1 below. Table 1 below summarizes the physical properties of each PVA.

Table 1

|  | Vinyl acetate (parts by mass) | Methanol (parts by mass) | Type of Monomer (a) | Amount of Monomer (a) Added (parts by mass) | Polymerization Rate (%) | NaOH Molar Ratio in Saponification |
|---|---|---|---|---|---|---|
| PVA-1 | 740 | 260 | Itaconic anhydride | 2.6 | 45 | 0.01 |
| PVA-2 | 920 | 80 | Itaconic anhydride | 0.7 | 25 | 0.007 |
| PVA-3 | 600 | 400 | Dimethyl maleate | 7.0 | 60 | 0.01 |
| PVA-4 | 920 | 80 | Monomethyl maleate | 0.6 | 25 | 0.01 |
| PVA-5 | 920 | 80 | Monomethyl fumarate | 4.9 | 25 | 0.007 |
| PVA-6 | 920 | 80 | Methyl methacrylate | 2.1 | 25 | 0.01 |
| PVA-7 | 920 | 80 | Vinyl trimethoxysilane | 2.9 | 25 | 0.014 |
| PVA-8 | 920 | 80 | Monomethyl maleate | 26.3 | 25 | 0.007 |

In Examples 1-1 to 1-10 below, lithium secondary cell negative electrodes were formed for PVA-1 to PVA-7 produced above, and their performance was evaluated. In Comparative Examples 1-1 to 1-9, lithium secondary cell negative electrodes were formed using PVA-8 produced above and various PVAs described later, and their performance was evaluated.

(Example 1-1)

• Preparation of Binder Aqueous Solution

In Example 1-1, PVA-1 was used as PVA serving as a binder. First, the degree of modification, degree of saponification, and polymerization degree of PVA-1 were determined by the above-described methods. Next, water was added to PVA-1 and heated and mixed at 80°C for 1 hour, thereby obtaining a binder aqueous solution containing a vinyl alcohol-based polymer and having a solid content concentration of about 10% by mass. The solid content concentration was calculated from the mass of the remaining solid content after weighing 3 g of the binder solution in an aluminum cup and drying it in a hot air dryer at 105°C for 3 hours. For the binder aqueous solution, the viscosity was measured, and TI was calculated by the methods described above. The physical properties of the binder (degree of modification, degree of saponification, and polymerization degree) and the physical properties of the binder aqueous solution (viscosity and TI) are summarized in Table 2 below.

• Preparation of Negative Electrode Slurry

Further, a negative electrode slurry was prepared by introducing the above-described binder aqueous solution having a solid content concentration of 10% by mass, artificial graphite serving as a negative electrode active material (FSN-1, manufactured by Shanshan Group Co., Ltd., China), and Super-P (manufactured by TIMCAL Ltd.) serving as a conductive agent (conductivity-imparting agent) into a dedicated container and kneading them using a planetary stirrer (ARE-250, manufactured by THINKY CORPORATION). Upon the introduction, the solid content in the binder aqueous solution was adjusted to 3 parts by mass, the solid content of artificial graphite was adjusted to 96 parts by mass, the solid content of Super-P was adjusted to 1 part by mass. In other words, the composition ratio of the active material, the conductive agent, and the binder in the negative electrode slurry is graphite powder: conductive agent: binder = 96:1:3 (mass ratio) as a solid content. The stability of the prepared slurry was evaluated by the method described above. Table 3 below summarizes the results.

• Production of Lithium Secondary Cell Negative Electrode

A current collector of copper foil (CST8G, manufactured by Fukuda Metal Foil & Powder Co., Ltd.) was coated with the negative electrode slurry obtained as described above using a bar coater (T101, manufactured by Matsuo Sangyo Co., Ltd.). After primary drying in a hot air dryer for 30 minutes at 80°C, a rolling process was performed using a roll press (manufactured by Hohsen Corp.). Then, after punching the rolled product as a cell electrode ($\varphi$: 14 mm), a coin cell negative electrode was prepared by secondary drying under reduced pressure conditions at 140°C for 3 hours. The peeling strength of the produced coin cell negative electrode was measured by the method described above. Table 3 below summarizes the results.

• Production of Lithium Secondary Cell

The cell negative electrode obtained as described above was transferred to a glove box (manufactured by Miwa Manufacturing Co., Ltd.) in an argon gas atmosphere. Metallic lithium foil (thickness: 0.2 mm; $\varphi$: 16 mm) was used for the positive electrode, a polypropylene-based separator (Cellguard # 2400, made by Polypore, Inc.) was used, and a mixed solvent system ($1M$-$LiPF_6$, EC/EMC = 3/7 vol%, $VC_2$ % by mass) in which vinylene carbonate (VC) was added to ethylene carbonate (EC) and ethyl methyl carbonate (EMC) for lithium hexafluorophosphate ($LiPF_6$) was used as an electrolytic solution for injection. With such a configuration, a coin cell (2032 type) was manufactured. The discharge capacity retention rate and DC resistance value of the produced coin cell were measured by the methods described above. Table 3 below summarizes the results.

(Example 1-2)

A binder aqueous solution, a negative electrode slurry, a lithium secondary cell negative electrode, and a lithium secondary cell were prepared by the same methods as in Example 1-1 except that PVA-2 was used as PVA, and the same measurement and evaluation were performed. Tables 2 and 3 below summarize the results.

(Example 1-3)

A binder aqueous solution, a negative electrode slurry, a lithium secondary cell negative electrode, and a lithium secondary cell were prepared by the same methods as in Example 1-1 except that PVA-3 was used as PVA, and the same measurement and evaluation were performed. Tables 2 and 3 below summarize the results.

(Example 1-4)

A binder aqueous solution, a negative electrode slurry, a lithium secondary cell negative electrode, and a lithium secondary cell were prepared by the same methods as in Example 1-1 except that PVA-4 was used as PVA, and the same measurement and evaluation were performed. Tables 2 and 3 below summarize the results.

(Example 1-5)

A binder aqueous solution, a negative electrode slurry, a lithium secondary cell negative electrode, and a lithium secondary cell were prepared by the same methods as in Example 1-1 except that PVA-5 was used as PVA, and the same measurement and evaluation were performed. Tables 2 and 3 below summarize the results.

(Example 1-6)

A binder aqueous solution, a negative electrode slurry, a lithium secondary cell negative electrode, and a lithium secondary cell were prepared by the same methods as in Example 1-1 except that PVA-6 was used as PVA, and the same measurement and evaluation were performed. Tables 2 and 3 below summarize the results.

(Example 1-7)

A binder aqueous solution, a negative electrode slurry, a lithium secondary cell negative electrode, and a lithium secondary cell were prepared by the same methods as in Example 1-1 except that PVA-7 was used as PVA, and the same measurement and evaluation were performed. Tables 2 and 3 below summarize the results.

(Example 1-8)

A negative electrode slurry, a lithium secondary cell negative electrode, and a lithium secondary cell were prepared by the same methods as in Example 1-1 except that PVA-2 was used as PVA and a binder NMP solution having a solid content concentration of 7.5% by mass was used instead of the binder aqueous solution, and the same measurement and evaluation were performed. The method of preparing a binder NMP solution having a solid content concentration of 7.5% by mass is the same as the method shown in Example 2-1 described later. The same applies to Example 1-9, Example 1-10, and Comparative Example 1-8 below.

(Example 1-9)

A negative electrode slurry, a lithium secondary cell negative electrode, and a lithium secondary cell were prepared by the same methods as in Example 1-1 except that PVA-3 was used as PVA and a binder NMP solution having a solid content concentration of 7.5% by mass was used instead of the binder aqueous solution, and the same measurement and evaluation were performed. Tables 2 and 3 below summarize the results.

(Example 1-10)

A negative electrode slurry, a lithium secondary cell negative electrode, and a lithium secondary cell were prepared by the same methods as in Example 1-1 except that PVA-4 was used as PVA and a binder NMP solution having a solid content concentration of 7.5% by mass was used instead of the binder aqueous solution, and the same measurement and evaluation were performed. Tables 2 and 3 below summarize the results.

(Comparative Example 1-1)

A binder aqueous solution, a negative electrode slurry, a lithium secondary cell negative electrode, and a lithium secondary cell were prepared by the same methods as in Example 1-1 except that PVA having a polymerization degree of 1700, a degree of modification of 0, and a degree of saponification of 88 was used as PVA, and the same measurement and evaluation were performed. Tables 2 and 3 below summarize the results.

(Comparative Example 1-2)

A binder aqueous solution, a negative electrode slurry, a lithium secondary cell negative electrode, and a lithium secondary cell were prepared by the same methods as in Example 1-1 except that PVA having a polymerization degree of 2400, a degree of modification of 0, and a degree of saponification of 88 was used as PVA, and the same measurement and evaluation were performed. Tables 2 and 3 below summarize the results.

(Comparative Example 1-3)

A binder aqueous solution, a negative electrode slurry, a lithium secondary cell negative electrode, and a lithium secondary cell were prepared by the same methods as in Example 1-1 except that PVA having a polymerization degree of 3500, a degree of modification of 0, and a degree of saponification of 88 was used as PVA, and the same measurement and evaluation were performed. Tables 2 and 3 below summarize the results.

(Comparative Example 1-4)

A binder aqueous solution, a negative electrode slurry, a lithium secondary cell negative electrode, and a lithium secondary cell were prepared by the same methods as in Example 1-1 except that PVA having a polymerization degree of 4500, a degree of modification of 0, and a degree of saponification of 88 was used as PVA, and the same measurement and evaluation were performed. Tables 2 and 3 below summarize the results.

(Comparative Example 1-5)

A binder aqueous solution, a negative electrode slurry, a lithium secondary cell negative electrode, and a lithium secondary cell were prepared by the same methods as in Example 1-1 except that PVA having a polymerization degree of 4500, a degree of modification of 0, and a degree of saponification of 95 was used as PVA, and the same measurement and evaluation were performed. Tables 2 and 3 below summarize the results.

(Comparative Example 1-6)

A binder aqueous solution, a negative electrode slurry, a lithium secondary cell negative electrode, and a lithium secondary cell were prepared by the same methods as in Example 1-1 except that PVA-8 was used as PVA, and the same measurement and evaluation were performed. Tables 2 and 3 below summarize the results.

(Comparative Example 1-7)

A binder aqueous solution, a negative electrode slurry, a lithium secondary cell negative electrode, and a lithium secondary cell were prepared by the same methods as in Example 1-1 except that polyacrylic acid (molecular weight: 250,000, manufactured by FUJIFILM Wako Pure Chemical Corporation) was used instead of PVA, and the same measurement and evaluation were performed. Tables 2 and 3 below summarize the results.

(Comparative Example 1-8)

A negative electrode slurry, a lithium secondary cell negative electrode, and a lithium secondary cell were prepared by the same methods as in Example 1-1 except that PVA having a polymerization degree of 3500, a degree of modification of 0, and a degree of saponification of 88 was used as PVA and a binder NMP solution having a solid content concentration of 7.5% by mass was used instead of the binder aqueous solution, and the same measurement and evaluation were performed. Tables 2 and 3 below summarize the results.

(Comparative Example 1-9)

A 10% by mass aqueous solution of a water-soluble lithium-modified isobutene-maleic anhydride copolymer resin (average molecular weight: 470,000; neutralization degree: 1.0; ring-opening rate: 100%) was prepared as a negative electrode binder composition. The lithium-modified isobutene-maleic anhydride copolymer resin was prepared by adding 2 equivalents of lithium hydroxide to the maleic anhydride unit in an isobutene-maleic anhydride copolymer.
A negative electrode slurry, a lithium secondary cell negative electrode, and a lithium secondary cell were prepared by the same methods as in Example 1-1 except that the binder composition was used instead of PVA, and the same measurement and evaluation were performed. Tables 2 and 3 below summarize the results.

[Table 2]

| | | Type of PVA | Degree of Modification | Degree of Saponification | PVA Polymerization Degree (Polymerization degrees PVA1 to PVA-8 before heat treatment) | Aqueous Solution Viscosity at 10s⁻¹ [Pa·s] | NMP Solution Viscosity at 10s⁻¹ [Pa·s] | Aqueous Solution Viscosity at 100s⁻¹ [Pa·s] | NMP Solution Viscosity at 100s⁻¹ [Pa·s] | TI Value (Viscosity at 10s⁻¹/ Viscosity at 100s⁻¹) (Aqueous Solution Viscosity) | TI Value (Viscosity at 10s⁻¹/ Viscosity at 100s⁻¹) (NMP Solution Viscosity) |
|---|---|---|---|---|---|---|---|---|---|---|---|
| Example | 1-1 | PVA-1 | 0.6 | 88 | 1700 | 7.468 | - | 4.103 | - | 1.82 | - |
| | 1-2 | PVA-2 | 0.2 | 80 | 3500 | 14.594 | - | 6.985 | - | 2.01 | - |
| | 1-3 | PVA-3 | 1.1 | 88 | 1000 | 4.852 | - | 2.651 | - | 1.83 | - |
| | 1-4 | PVA-4 | 0.2 | 88 | 3500 | 15.633 | - | 7.051 | - | 2.22 | - |
| | 1-5 | PVA-5 | 1.1 | 80 | 3500 | 22.367 | - | 6.54 | - | 3.42 | - |
| | 1-6 | PVA-6 | 0.6 | 88 | 3500 | 24.754 | - | 9.412 | - | 2.63 | - - |
| | 1-7 | PVA-7 | 0.2 | 95 | 3500 | 27.388 | - | 11.179 | - | 2.45 | - |
| | 1-8 | PVA-2 | 0.2 | 80 | 3500 | - | 15.178 | - | 5.588 | - | 2.72 |
| | 1-9 | PVA-3 | 1.1 | 88 | 1000 | - | 5.24 | - | 2.041 | - | 2.57 |
| | 1-10 | PVA-4 | 0.2 | 88 | 3500 | - | 15.507 | - | 5.739 | - | 2.7 |

(continued)

| | | Type of PVA | Degree of Modification | Degree of Saponification | PVA Polymerization Degree (Polymerization degrees PVA1 to PVA-8 before heat treatment) | Aqueous Solution Viscosity at 10s$^{-1}$ [Pa·s] | NMP Solution Viscosity at 10s$^{-1}$ [Pa·s] | Aqueous Solution Viscosity at 100s$^{-1}$ [Pa·s] | NMP Solution Viscosity at 100s$^{-1}$ [Pa·s] | TI Value (Viscosity at 10s$^{-1}$/ Viscosity at 100s$^{-1}$) (Aqueous Solution Viscosity) | TI Value (Viscosity at 10s$^{-1}$/ Viscosity at 100s$^{-1}$) (NMP Solution Viscosity) |
|---|---|---|---|---|---|---|---|---|---|---|---|
| Comparative Example | 1-1 | PVA | 0 | 88 | 1700 | 0.824 | - | 0.545 | - | 1.51 | - |
| | 1-2 | PVA | 0 | 88 | 2400 | 2.396 | - | 1.936 | - | 1.24 | - |
| | 1-3 | PVA | 0 | 88 | 3500 | 8.362 | - | 5.049 | - | 1.66 | - |
| | 1-4 | PVA | 0 | 88 | 4500 | 13.171 | - | 7.717 | - | 1.71 | - |
| | 1-5 | PVA | 0 | 95 | 4500 | 14.23 | - | 8.225 | - | 1.73 | - |
| | 1-6 | PVA-8 | 7.6 | 80 | 3500 | 32.134 | - | 7.994 | - | 4.02 | - |
| | 1-7 | Polyacrylic acid | - | - | - | 0.995 | - | 0.53 | - | 1.88 | - |
| | 1-8 | PVA | 0 | 88 | 3500 | - | 8.027 | - | 4.544 | - | 1.77 |
| | 1-9 | Lithium-modified isobutene-maleic anhydride copolymer | 0 | 88 | - | 2.25 | - | 1.17 | - | 1.92 | - |

Table 3

| | | Type of PVA | Slurry Solvent | Slurry Stability | Peeling Strength [N/m] | Discharge Capacity Retention Rate [%] | DC Resistance Value [Ω] |
|---|---|---|---|---|---|---|---|
| Example | 1-1 | PVA-1 | Water | ○ | 76 | 99.2 | 354 |
| | 1-2 | PVA-2 | Water | ○ | 102 | 99.5 | 342 |
| | 1-3 | PVA-3 | Water | ○ | 66 | 99.3 | 345 |
| | 1-4 | PVA-4 | Water | ○ | 111 | 99.6 | 368 |
| | 1-5 | PVA-5 | Water | ○ | 132 | 99.4 | 372 |
| | 1-6 | PVA-6 | Water | ○ | 137 | 99.6 | 375 |
| | 1-7 | PVA-7 | Water | ○ | 163 | 99.2 | 363 |
| | 1-8 | PVA-2 | NMP | ○ | 107 | 99.2 | 339 |
| | 1-9 | PVA-3 | NMP | ○ | 72 | 99.5 | 352 |
| | 1-10 | PVA-4 | NMP | ○ | 108 | 99.4 | 356 |
| Comparative Example | 1-1 | PVA | Water | × | 27 | 94.3 | 458 |
| | 1-2 | PVA | Water | × | 34 | 93.3 | 434 |
| | 1-3 | PVA | Water | ○ | 84 | 95.2 | 418 |
| | 1-4 | PVA | Water | ○ | 98 | 96.1 | 412 |
| | 1-5 | PVA | Water | ○ | 102 | 96.2 | 420 |
| | 1-6 | PVA-8 | Water | × | 162 | 98.8 | 381 |
| | 1-7 | Polyacrylic acid | Water | × | 37 | 99 | 371 |
| | 1-8 | PVA | NMP | ○ | 87 | 94.8 | 432 |
| | 1-9 | Lithium-modified isobutene-maleic anhydride copolymer | Water | × | 21 | 99 | 214 |

As shown in Table 3 above, in the Examples, the slurry was stable, and had a favorable peeling strength, a high discharge capacity retention rate, and a low DC resistance value as compared with the Comparative Examples. This indicates that the electrode was uniformly formed.

In Examples 2-1 to 2-7 below, lithium secondary cell positive electrodes were formed for PVA-1 to PVA-7 produced above, and their performance was evaluated. In Comparative Examples 2-1 to 2-8, lithium secondary cell negative electrodes were formed using PVA-8 produced above and various PVAs described later, and their performance was evaluated.

(Example 2-1)

• Preparation of Binder NMP Solution

In Example 2-1, PVA-1 was used as PVA serving as a binder. A binder NMP solution containing a vinyl alcohol-based polymer and having a solid content concentration of about 7.5% by mass was obtained by adding 92.5 parts by mass of NMP (FUJIFILM Wako Pure Chemical Corporation) to 7.5 parts by mass of PVA-1, stirring the mixture while raising the temperature to 80°C, and further stirring the mixture while heating until complete dissolution was visually confirmed. The solid content concentration was calculated from the mass of the remaining solid content after weighing 3 g of the binder solution in an aluminum cup and drying it in a hot air dryer at 120°C for 4 hours. For the binder NMP solution, the viscosity was measured, and TI was calculated by the methods described above. Further, the NMP solubility of the prepared binder NMP solution was evaluated by the method described above. The physical properties of the binder (degree of modification, degree of saponification, and polymerization degree), the physical properties of the binder NMP solution (viscosity and TI), and the NMP solubility are summarized in Table 4 below.

• Preparation of Positive Electrode Slurry

Further, a positive electrode slurry was prepared by introducing the above-described binder NMP solution having a solid content concentration of 7.5% by mass, NCM ("CELLSEED C-5H" manufactured by Nippon Chemical Industrial CO., LTD.) serving as a positive electrode active material, and Super-P (manufactured by TIMCAL Ltd.) serving as a conductive agent (conductivity-imparting agent) into a dedicated container and kneading them using a planetary stirrer (ARE-250, manufactured by THINKY CORPORATION). Upon the introduction, the solid content in the binder NMP solution was adjusted to 3 parts by mass, the solid content of NCM was adjusted to 95 parts by mass, the solid content of Super-P was adjusted to 2 parts by mass. In other words, the composition ratio of the active material, the conductive agent, and the binder in the positive electrode slurry is NCM powder: conductive agent: binder = 95:2:3 (mass ratio) as a solid content.

• Production of Lithium Secondary Cell Positive Electrode

A current collector of aluminum foil (CST8G, manufactured by Fukuda Metal Foil & Powder Co., Ltd.) was coated with the positive electrode slurry obtained as described above using a bar coater (T101, manufactured by Matsuo Sangyo Co., Ltd.). After primary drying in a hot air dryer for 30 minutes at 80°C, a rolling process was performed using a roll press (manufactured by Hohsen Corp.). Then, after punching the rolled product as a cell electrode ($\varphi$: 14 mm), a coin cell positive electrode was prepared by secondary drying under reduced pressure conditions at 140°C for 3 hours. The peeling strength of the produced coin cell negative electrode was measured, and the uniformity of the positive electrode was evaluated by the methods described above. Table 5 below summarizes the results.

• Production of Lithium Secondary Cell

The cell positive electrode obtained as described above was transferred to a glove box (manufactured by Miwa Manufacturing Co., Ltd.) in an argon gas atmosphere. Metallic lithium foil (thickness: 0.2 mm; $\varphi$: 16 mm) was used for the negative electrode, a polypropylene-based separator (Cellguard # 2400, made by Polypore, Inc.) was used, and a mixed solvent system (1M-$LiPF_6$, EC/EMC = 3/7 vol%, $VC_2$ % by mass) in which vinylene carbonate (VC) was added to ethylene carbonate (EC) and ethyl methyl carbonate (EMC) for lithium hexafluorophosphate ($LiPF_6$) was used as an electrolytic solution for injection. With such a configuration, a coin cell (2032 type) was manufactured. The discharge capacity retention rate of the produced coin cell was measured by the method described above. Table 5 below summarizes the results.

(Example 2-2)

A binder NMP solution, a positive electrode slurry, a lithium secondary cell positive electrode, and a lithium secondary cell were prepared by the same methods as in Example 2-1 except that PVA-2 was used as PVA, and the same measurement and evaluation were performed. Tables 4 and 5 below summarize the results.

(Example 2-3)

A binder NMP solution, a positive electrode slurry, a lithium secondary cell positive electrode, and a lithium secondary cell were prepared by the same methods as in Example 2-1 except that PVA-3 was used as PVA, and the same measurement and evaluation were performed. Tables 4 and 5 below summarize the results.

(Example 2-4)

A binder NMP solution, a positive electrode slurry, a lithium secondary cell positive electrode, and a lithium secondary cell were prepared by the same methods as in Example 2-1 except that PVA-4 was used as PVA, and the same measurement and evaluation were performed. Tables 4 and 5 below summarize the results.

(Example 2-5)

A binder NMP solution, a positive electrode slurry, a lithium secondary cell positive electrode, and a lithium secondary cell were prepared by the same methods as in Example 2-1 except that PVA-5 was used as PVA, and the same measurement and evaluation were performed. Tables 4 and 5 below summarize the results.

(Example 2-6)

A binder NMP solution, a positive electrode slurry, a lithium secondary cell positive electrode, and a lithium secondary cell were prepared by the same methods as in Example 2-1 except that PVA-6 was used as PVA, and the same measurement and evaluation were performed. Tables 4 and 5 below summarize the results.

(Example 2-7)

A binder NMP solution, a positive electrode slurry, a lithium secondary cell positive electrode, and a lithium secondary cell were prepared by the same methods as in Example 2-1 except that PVA-7 was used as PVA, and the same measurement and evaluation were performed. Tables 4 and 5 below summarize the results.

(Comparative Example 2-1)

A binder NMP solution, a positive electrode slurry, a lithium secondary cell positive electrode, and a lithium secondary cell were prepared by the same methods as in Example 2-1 except that PVA having a polymerization degree of 1700, a degree of modification of 0, and a degree of saponification of 88 was used as PVA, and the same measurement and evaluation were performed. Tables 4 and 5 below summarize the results.

(Comparative Example 2-2)

A binder NMP solution, a positive electrode slurry, a lithium secondary cell positive electrode, and a lithium secondary cell were prepared by the same methods as in Example 2-1 except that PVA having a polymerization degree of 2400, a degree of modification of 0, and a degree of saponification of 88 was used as PVA, and the same measurement and evaluation were performed. Tables 4 and 5 below summarize the results.

(Comparative Example 2-3)

A binder NMP solution, a positive electrode slurry, a lithium secondary cell positive electrode, and a lithium secondary cell were prepared by the same methods as in Example 2-1 except that PVA having a polymerization degree of 3500, a degree of modification of 0, and a degree of saponification of 88 was used as PVA, and the same measurement and evaluation were performed. Tables 4 and 5 below summarize the results.

(Comparative Example 2-4)

A binder NMP solution was prepared by the same methods as in Example 2-1 except that PVA having a polymerization degree of 4500, a degree of modification of 0, and a degree of saponification of 88 was used as PVA. However, PVA was not completely dissolved in the binder NMP solution, and therefore, a positive electrode slurry, a lithium secondary cell positive electrode, and a lithium secondary cell could not be produced. Table 4 below summarizes the results that could be measured.

(Comparative Example 2-5)

A binder NMP solution was prepared by the same methods as in Example 2-1 except that PVA having a polymerization degree of 4500, a degree of modification of 0, and a degree of saponification of 95 was used as PVA. However, PVA was not completely dissolved in the binder NMP solution, and therefore, a positive electrode slurry, a lithium secondary cell positive electrode, and a lithium secondary cell could not be produced. Table 4 below summarizes the results that could be measured.

(Comparative Example 2-6)

A binder NMP solution, a positive electrode slurry, a lithium secondary cell positive electrode, and a lithium secondary cell were prepared by the same methods as in Example 2-1 except that PVA-8 was used as PVA, and the same measurement and evaluation were performed. Tables 4 and 5 below summarize the results.

(Comparative Example 2-7)

A binder NMP solution was prepared by the same methods as in Example 2-1 except that Polyacrylic acid (molecular weight: 250,000, manufactured by FUJIFILM Wako Pure Chemical Corporation) was used instead of PVA. However, PVA was not completely dissolved in the binder NMP solution, and therefore, a positive electrode slurry, a lithium secondary cell positive electrode, and a lithium secondary cell could not be produced. Table 4 below summarizes the results that could be measured.

(Comparative Example 2-8)

A 10% by mass aqueous solution of a water-soluble lithium-modified isobutene-maleic anhydride copolymer resin (average molecular weight: 470,000; neutralization degree: 1.0; ring-opening rate: 100%) was prepared. The lithium-modified isobutene-maleic anhydride copolymer resin was prepared by adding 2 equivalents of lithium hydroxide to the maleic anhydride unit in an isobutene-maleic anhydride copolymer. A binder NMP solution was prepared with a solid obtained by drying the 10% by mass aqueous solution at 120°C by the same methods as in Example 2-1. However, PVA was not completely dissolved in the binder NMP solution, and therefore, a positive electrode slurry, a lithium secondary cell positive electrode, and a lithium secondary cell could not be produced. Table 4 below summarizes the results that could be measured.

Table 4

| | | Type of PVA | Degree of Modification | Degree of Saponification | PVA Polymerization Degree (Polymerization degrees PVA1 to PVA-8 before heat treatment) | NMP Solubility | NMP Solution Viscosity at 10s⁻¹ [Pa·s] | NMP Solution Viscosity at 100s⁻¹ [Pa·s] | TI Value (Viscosity at 10s⁻¹/viscosity at 100s⁻¹) (NMP Solution Viscosity) |
|---|---|---|---|---|---|---|---|---|---|
| Example | 2-1 | PVA-1 | 0.6 | 88 | 1700 | A | 7.692 | 3.364 | 2.29 |
| | 2-2 | PVA-2 | 0.2 | 80 | 3500 | A | 15.178 | 5.588 | 2.72 |
| | 2-3 | PVA-3 | 1.1 | 88 | 1000 | A | 5.240 | 2.041 | 2.57 |
| | 2-4 | PVA-4 | 0.2 | 88 | 3500 | A | 15.507 | 5.739 | 2.70 |
| | 2-5 | PVA-5 | 1.1 | 80 | 3500 | A | 23.485 | 4.905 | 4.79 |
| | 2-6 | PVA-6 | 0.6 | 88 | 3500 | A | 26.734 | 7.153 | 3.74 |
| | 2-7 | PVA-7 | 0.2 | 95 | 3500 | B | 30.127 | 8.272 | 3.64 |
| Comparative Example | 2-1 | PVA | 0 | 88 | 1700 | A | 0.783 | 0.474 | 1.65 |
| | 2-2 | PVA | 0 | 88 | 2400 | B | 2.324 | 1.704 | 1.36 |
| | 2-3 | PVA | 0 | 88 | 3500 | B | 8.028 | 4.544 | 1.77 |
| | 2-4 | PVA | 0 | 88 | 4500 | C | - | - | - |
| | 2-5 | PVA | 0 | 95 | 4500 | C | - | - | - |
| | 2-6 | PVA-8 | 7.6 | 80 | 3500 | B | 41.774 | 5.596 | 7.47 |
| | 2-7 | Polyacrylic acid | - | - | - | C | - | - | - |
| | 2-8 | Lithium-modified isobutene-maleic anhydride copolymer | - | - | - | C | - | - | - |

Table 5

| | | Type of PVA | Electrode Uniformity | Peeling Strength [N/m] | Discharge Capacity Retention Rate [%] |
|---|---|---|---|---|---|
| Example | 2-1 | PVA-1 | ○ | 467 | 99.6 |
| | 2-2 | PVA-2 | ○ | 642 | 99.1 |
| | 2-3 | PVA-3 | ○ | 420 | 99.3 |
| | 2-4 | PVA-4 | ○ | 683 | 99.1 |
| | 2-5 | PVA-5 | ○ | 701 | 98.8 |
| | 2-6 | PVA-6 | ○ | 713 | 98.7 |
| | 2-7 | PVA-7 | ○ | 754 | 98.5 |
| Comparative Example | 2-1 | PVA | ○ | 69 | 94.2 |
| | 2-2 | PVA | ○ | 148 | 92.8 |
| | 2-3 | PVA | ○ | 279 | 93.9 |
| | 2-4 | PVA | - | - | - |
| | 2-5 | PVA | - | - | - |
| | 2-6 | PVA-8 | × | 744 | 95.4 |
| | 2-7 | Polyacrylic acid | - | - | - |
| | 2-8 | Lithium-modified isobutene-maleic anhydride copolymer | - | - | - |

As shown in Table 5 above, uniform electrodes having an extremely excellent peeling strength and a high discharge capacity retention rate were formed in the Examples as compared with the Comparative Examples.

The binder of the present invention allows even an active material used in a lithium primary cell to achieve uniform electrode formation and excellent peeling strength. In Reference Examples 1-1 and 1-2 below, lithium primary cell positive electrodes were formed for PVA-2 or PVA-4 produced above, and their performance was evaluated.

(Reference Example 1-1)

A positive electrode slurry, a lithium primary cell positive electrode, and a lithium primary cell were prepared by the same methods as in Example 2-1 except that PVA-2, the above-described binder aqueous solution having a solid content concentration 10% by mass, and electrolyzed manganese dioxide serving as a positive electrode active material were used, and the same measurement and evaluation were performed regarding the uniformity of the electrode and the peeling strength. Table 6 below shows the results.

(Reference Example 1-2)

A positive electrode slurry, a lithium primary cell positive electrode, and a lithium primary cell were prepared by the same methods as in Reference Example 1-2 except that PVA-4 was used instead of PVA-2, and the same measurement and evaluation were performed regarding the uniformity of the electrode and the peeling strength. Table 6 below shows the results.

Table 6

| | | Type of PVA | Electrode Uniformity | Peeling Strength [N/m] |
|---|---|---|---|---|
| Reference Example | 1-1 | PVA-2 | ○ | 655 |
| | 1-2 | PVA-4 | ○ | 679 |

**Claims**

1.  A non-aqueous electrolyte cell electrode binder, comprising a water-soluble resin, wherein

    when the binder is in a state of an aqueous solution with a solid content concentration of 10% by mass, a viscosity at a shear rate of 10 s$^{-1}$ at 25°C of the aqueous solution is from 4 Pa·s to 30 Pa·s, and
    a thixotropic index defined by a viscosity ratio between a viscosity at a shear rate of 10 s$^{-1}$ and a viscosity at a shear rate of 100 s$^{-1}$ at 25°C of the aqueous solution is from 1.8 to 5.

2.  The non-aqueous electrolyte cell electrode binder according to claim 1, wherein

    when the binder is in a state of an N-methyl-2-pyrrolidone solution with a solid content concentration of 7.5% by mass, the viscosity at a shear rate of 10 s$^{-1}$ at 25°C of the solution is from 4 Pa·s to 35 Pa·s, and
    the thixotropic index defined by a viscosity ratio between a viscosity at a shear rate of 10 s$^{-1}$ and a viscosity at a shear rate of 100 s$^{-1}$ at 25°C of the solution is from 2 to 6.

3.  The non-aqueous electrolyte cell electrode binder according to claim 1 or 2, wherein the water-soluble resin is a vinyl alcohol-based polymer having a crosslinked structure.

4.  The non-aqueous electrolyte cell electrode binder according to any one of claims 1 to 3, wherein a degree of modification of the water-soluble resin is from 0.02% by mol to 5% by mol based on the number of moles of all monomer units constituting the water-soluble resin.

5.  A non-aqueous electrolyte cell electrode binder solution, comprising the non-aqueous electrolyte cell electrode binder according to any one of claims 1 to 4 and water, wherein

    a viscosity at a shear rate of 10 s$^{-1}$ at 25°C of the solution is from 4 Pa·s to 30 Pa·s, and
    a thixotropic index defined by a viscosity ratio between a viscosity at a shear rate of 10 s$^{-1}$ and a viscosity at a shear rate of 100 s$^{-1}$ at 25°C of the solution is from 1.8 to 5.

6.  A non-aqueous electrolyte cell electrode binder solution, comprising the non-aqueous electrolyte cell electrode binder according to any one of claims 1 to 4 and N-methyl-2-pyrrolidone, wherein

    a viscosity at a shear rate of 10 s$^{-1}$ at 25°C of the solution is from 4 Pa·s to 35 Pa·s, and
    a thixotropic index defined by a viscosity ratio between a viscosity at a shear rate of 10 s$^{-1}$ and a viscosity at a shear rate of 100 s$^{-1}$ at 25°C of the solution is from 2 to 6.

7.  A non-aqueous electrolyte cell electrode slurry, comprising the non-aqueous electrolyte cell electrode binder solution according to claim 5 or 6 and an active material.

8.  The non-aqueous electrolyte cell electrode slurry according to claim 7, wherein a content of the non-aqueous electrolyte cell electrode binder is from 0.1 parts by mass to 20 parts by mass with respect to 100 parts by mass of the active material.

9.  A non-aqueous electrolyte cell electrode, comprising a cured product of the non-aqueous electrolyte cell electrode slurry according to claim 7 or 8 and a current collector.

10. A non-aqueous electrolyte cell, comprising the non-aqueous electrolyte cell electrode according to claim 9.

## INTERNATIONAL SEARCH REPORT

International application No.

PCT/JP2020/000271

### A. CLASSIFICATION OF SUBJECT MATTER
H01M 4/139(2010.01)i; H01M 4/62(2006.01)i; H01G 11/38(2013.01)i
FI: H01M4/62 Z; H01M4/139; H01G11/38

According to International Patent Classification (IPC) or to both national classification and IPC

### B. FIELDS SEARCHED

Minimum documentation searched (classification system followed by classification symbols)
H01M4/139; H01M4/62; H01G11/38

Documentation searched other than minimum documentation to the extent that such documents are included in the fields searched
| | |
|---|---|
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2004-095198 A (SONY CORP.) 25.03.2004 (2004-03- | 1-3, 5-10 |
| Y | 25) claims, paragraphs [0033], [0039]-[0042], examples | 1-10 |
| Y | JP 2013-105549 A (KURARAY CO., LTD.) 30.05.2013 (2013-05-30) claims, paragraph [0011], examples | 1-10 |
| Y | JP 2016-021391 A (NIPPON ZEON CO., LTD.) 04.02.2016 (2016-02-04) claims, paragraphs [0036], [0041], examples | 1-10 |
| A | JP 2013-500556 A (EVONIK DEGUSSA GMBH) 07.01.2013 (2013-01-07) | 1-10 |
| A | JP 2012-099251 A (NIPPON ZEON CO., LTD.) 24.05.2012 (2012-05-24) | 1-10 |
| A | JP 2018-005989 A (SEKISUI CHEMICAL CO., LTD.) 11.01.2018 (2018-01-11) | 1-10 |

☐ Further documents are listed in the continuation of Box C.    ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 23 March 2020 (23.03.2020) | 07 April 2020 (07.04.2020) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**
Information on patent family members

International application No.

PCT/JP2020/000271

| Patent Documents referred in the Report | Publication Date | Patent Family | Publication Date |
|---|---|---|---|
| JP 2004-095198 A | 25 Mar. 2004 | (Family: none) | |
| JP 2013-105549 A | 30 May 2013 | (Family: none) | |
| JP 2016-021391 A | 04 Feb. 2016 | (Family: none) | |
| JP 2013-500556 A | 07 Jan. 2013 | US 2012/0208081 A1 WO 2011/012343 A1 EP 2460213 A1 KR 10-2012-0038973 A | |
| JP 2012-099251 A | 24 May 2012 | CN 102498594 A | |
| JP 2012-099251 A | 11 Jan. 2018 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H11250915 A
- JP 2017059527 A
- JP 2017107827 A
- JP 2013037955 A